# EUROPEAN PATENT APPLICATION

(11) **EP 3 934 069 A1**
(43) Date of publication of application: **05.01.2022**
(21) Application number: 20183840.6
(22) Date of filing: 03.07.2020
(51) Int. Cl.: H02K 5/06, H02K 5/136, H02K 5/22, H02K 5/20, H02K 1/20, H02K 5/15, H02K 15/14

(54) **ARRANGEMENT FOR MOTOR AND HOUSING**

(71) Applicant: ABB Schweiz AG, 5400 Baden (CH)
(72) Inventor: Ikäheimo, Jouni, 65320 Vaasa (FI)
(74) Representative: Kolster Oy Ab

(57) **Abstract**

An arrangement for a motor (100) and a housing, comprising a stator core (104) with a longitudinal centre axis (A-A) and a housing (122) surrounding the stator core (104) is disclosed. The housing comprises a first part (124) and a second part (126), the first part comprising first half of end shield (128, 130) at each axial end of the housing and the second part comprising second half of end shield (132, 134) at each axial end of the housing. Both first and second parts further comprise a housing structure (136, 138) between the end shields. The first part comprises a protruding part at the outer edge of the bottom of the first part and the second part comprises a corresponding protruding part. The protruding parts comprise fastening points (204, 206, 208, 210) for enabling the fastening of the first and second part together.

## Description

### Technical Field

The exemplary and non-limiting embodiments of the invention relate generally to electric motors.

### Background

Electric motors are used in many applications. Electric motors are used to drive different kinds of machines in many environments, some of which may be hazardous.

An electric motor may comprise a rotatable rotor and a stationary stator. The stator may comprise a longitudinal stator core with a longitudinal centre axis. A bore in the centre of the stator core may receive the rotor. An arrangement for an electric motor may comprise a housing or a frame may surround an outer surface of the stator core, whereby the stator core is attached to the frame.

Typically in a flameproof electric motor arrangement construction, especially for motors in hazardous environments, the stator is inserted in the housing, the rotor is inserted inside the stator and the bearings and end shields are attached to the whole in axial direction using fasteners, like bolts. This standard construction is proven, but there are some drawbacks. For example, the assembly procedure is difficult to automatize since the components must move axially during the assembly.

### Brief description

According to an aspect of the present invention, there is provided an arrangement of claim 1.

According to an aspect, there is provided a method for assembling an arrangement of claim 12.

One or more examples of implementations are set forth in more detail in the accompanying drawings and the description below. Other features will be apparent from the description and drawings, and from the claims. The embodiments and or examples and features, if any, described in this specification that do not fall under the scope of the independent claims are to be interpreted as examples useful for understanding various embodiments of the invention.

### Brief description of the drawings

In the following the invention will be described in greater detail by means of preferred embodiments with reference to the accompanying drawings, in which
Figure 1 shows a longitudinal cross section of an arrangement for an electric motor and a housing,
Figure 2 shows a transverse cross section of an arrangement for an electric motor and a housing, and
Figure 3 illustrates an example of assembling the arrangement for a motor and a housing.

### Detailed description of some embodiments

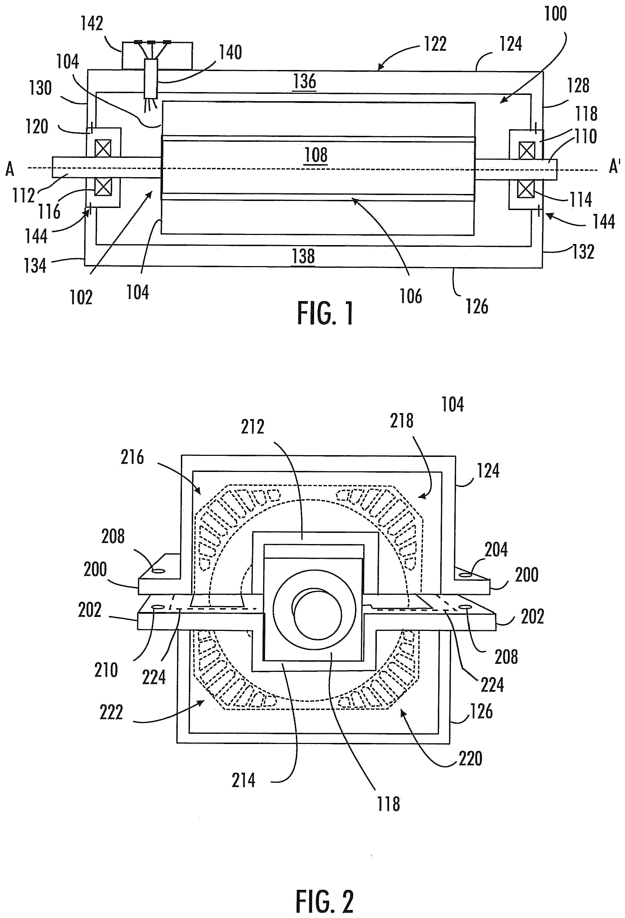

Fig. 1 shows a schematic example of an arrangement comprising an electric motor 100 and a housing 122. The electric motor 100 of Fig.1 comprises a longitudinal centre axis A-A', a cylindrical rotor 102 and a cylindrical stator core 104 surrounding the rotor 102.

The rotatable rotor 102 may comprise a centre portion 108 and two end portions 110, 112 at each axial A -A' end of the centre portion 108. Each end portion 110, 112 of the rotor 102 may be supported by a bearing 114, 116 positioned in a bearing housing 118, 120.

In an embodiment, there is an air gap 106 between the outer surface of the centre portion 108 of the rotor 102 and the inner surface of the stator core 104.

The longitudinal centre axis A-A' forms a rotational axis of the rotor 102.

The stator core 104 may have a bore receiving the rotor 102.

The arrangement comprises a housing 122 around the electric motor. The housing comprises a first part 124 and a second part 126, the first part 124 comprising first half of end shield 128, 130 at each axial end of the housing and the second part 126 comprising second half of end shield 132, 134 at each axial end of the housing.

Both the first and second part comprises a housing structure 136, 138 extending between the end shields.

In an embodiment, the end portions 110, 112 of the rotor 102 are the only parts protruding from the axial ends of the housing. In an embodiment, the cross section of the housing is substantially square. Thus in an embodiment, the housing has essentially the shape of a cuboid.

In an embodiment, likewise the cross section of the stator core is substantially square, mating with the housing.

In an embodiment, the cross section of the housing is substantially circle. Likewise, the cross section of the stator core may be substantially circle, mating with the housing.

The stator core comprises axial channels opening at both end shields.

In an embodiment, the end shields of the housing comprise openings at each axial end for the bearing housings 118, 120.

In an embodiment, the cross section of a bearing housing is square. In an embodiment, the cross section of a bearing housing is circle. The shape of the corresponding openings at each axial end for the bearing housings correspond to the cross section of the housings.

In an embodiment, the first part 124 comprises sealed cable feedthrough 140 for connecting cables to stator leads. The feedthrough 140 may be located in a protective housing 142. In an embodiment, the motor may comprise connections. such as stator leads, for the cables.

Figure 2 shows a transverse cross section of an arrangement for an electric motor and a housing. Fig.2 shows the first part 124 and the second part 126 of the housing viewed from the direction of A'. The end shield 128 is pictured as transparent in this figure. The first part and the second part of the housing may be denotes as a lid and a bottom. The end shields are integrated into the housing in such way that the second halves of the end shields are integral with the bottom housing and first halves are integral with the lid part.

In an embodiment, the first part 124 comprises a protruding part 200 at the outer edge of the bottom of the first part and the second part 126 comprises a corresponding protruding part 202 at the outer edge of the top of the second part, the protruding parts both having one or more fastening points 204, 206, 208, 210 for enabling the fastening of the first and second part together.

The width of the connection between the first and second part must be sufficiently thick to act as a damping or flame gap of the housing. Typically the width is of the order 10 to 25 mm. In addition, the width of the bearing housings may be the same as the of the order 10 to 25 mm. However, these numerical values are merely non-limiting examples of possible values. In an embodiment, the connection between the first and second part and the protruding part may act as a part of damping or flame gap of the housing.

In an embodiment, a sealing substance, such as a silicone may be applied to the protruding part before assembly.

In an embodiment, the protruding part may comprise a groove 224 for a seal providing enhanced flame protection.

In an embodiment, both the first part 124 and the second part 126 comprise openings 212, 214 at the end shield for the bearing housing 118, 120.

In an embodiment, the bearing housings 118, 120 may be manufactured around the bearings beforehand and during the assembly of the motor and housing the bearing housings may be placed in place together with the stator and rotor. In an embodiment, the connection between the first and second part and the bearing housings may also act as a part of damping or flame gap of the housing. In an embodiment, the bearing housings are connected to the end shields of the housing utilising locking members 144 which prevent the movement of the bearing housings during and after assembly. The locking members 144 may be realised with pins which are installed in holes drilled into the bearing housings and end shields. However, also other realisations are possible.

Fig.2 illustrates the embodiment where the cross section of the housing is substantially square. In an embodiment, likewise the cross section of the stator core 104 is substantially square, mating with the housing. The stator core 104 is shown with dotted lines, being behind the end shield.

In an embodiment, the stator core comprises axial channels 216, 218, 220, 222 which open at both end shields. In an embodiment, the axial channels are located at the vertices of the stator core. In an embodiment, the axial channels are located uniformly around the bore where the rotor is located.

As mentioned, in a typical flameproof construction of a motor, a cylindrical stator is inserted in the main housing, and a rotor is inserted inside the stator and the bearings and end shields are attached to the whole in axial direction using fasteners. In this kind of construction connection leads must be taken to the terminal box through cable opening which must be then sealed with resin to ensure the hermetic enclosure. The hermetic cable feedthrough cannot be a separate component, since there would be very little space to connect its leads to stator winding leads due to limited space. Thus the advantage of manufacturing it separately is lost. Further, this kind of construction assembly is difficult to automatize since the components must move axially during the assembly. In addition, the use of the contemporary design involves so called "piling effect" which may give rise to a high pressure peaks during a potential gas combustion inside the motor volume. In the piling effect, the gas ignites in one end of the motor and the flame front accelerates in the thin airgap between the rotor and stator, igniting gas in the other end of the motor very rapidly as the flame front erupts from the airgap.

In the proposed solution, the housing is divided into first and second parts, denoted as a bottom and a lid. The end shields may be integrated into the housing in such way that the second half of the end shields are integral with the bottom housing and first halves integral with the lid part.

In an embodiment, the cross section of the housing is square rather than cylindrical. The stator may be made having a square cross section, mating with the square housing. Further, axial channels may be created in the corners of the stator. In this construction, the sealed cable feedthrough can be installed and connected easily to the stator leads before closing the lid part. The axial channels in the stator help to propagate a possible flame from one end of the stator into other end of the stator in a controlled way in the combustion situation, reducing the piling effect. What is more, all assembly can be done in vertical direction, enabling automatized assembly.

In an embodiment, the electric motor and housing are assembled upside down. Thus, in the operation of the electric motor the first part is the upper part and the second part is the lower part of the housing, but during assembly the first part is the lower part and the second part is the upper part of the housing. This enables the connecting of the cables through the feedthrough 140 more easily.

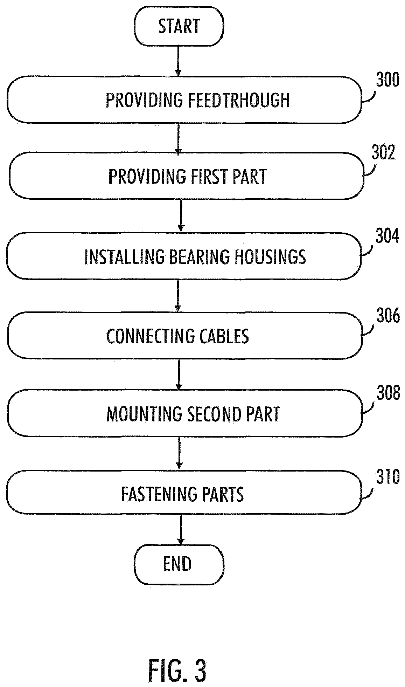

Fig.3 illustrates an example of assembling the arrangement for a motor and a housing.

In step 300, a feedthrough is provided on the first part of the housing, the feedthrough comprising cables for the motor.

In step 302, the stator core 104 is lowered to the first part of the housing 124.

In step 304, bearing housings 118, 120 are installed to the end shields. In an embodiment, the bearing housings are connected to the end shields of the housing utilising locking members.

In step 306, cables from the feedthrough of the first part of the housing are connected to stator leads.

In step 308, the second part of the housing is mounted on the first part and the stator core.

In step 310, the first and second parts are fastened together utilising fastening points 204, 206, 208, 210.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

It will be obvious to a person skilled in the art that, as the technology advances, the inventive concept can be implemented in various ways. The invention and its embodiments are not limited to the examples described above but may vary within the scope of the claims.

## Claims

1. An arrangement for a motor (100) and a housing, comprising a stator core (104) with a longitudinal centre axis (A-A) and a housing (122) surrounding the stator core (104),
the housing comprising a first part (124) and a second part (126), the first part comprising first half of end shield (128, 130) at each axial end of the housing and the second part comprising second half of end shield (132, 134) at each axial end of the housing,
both first and second parts further comprising housing structure (136, 138) between the end shields and;
the first part comprising a protruding part at the outer edge of the bottom of the first part and the second part comprising a corresponding protruding part at the outer edge of the top of the second part, the protruding parts having fastening points (204, 206, 208, 210) for enabling the fastening of the first and second part together.

2. The arrangement of claim 1, wherein the stator core comprises axial channels (216, 218) which open at both end shields.

3. The arrangement of claim 1, wherein the cross section of the housing being substantially square and the cross section of the stator core is substantially square, mating with the housing.

4. The arrangement of claim 3, wherein the axial channels are located at the vertices of the stator core.

5. The arrangement of claim 3, wherein the axial channels are located uniformly around the bore where the rotor is located

6. The arrangement of any preceding claim, wherein the housing comprises openings at each axial end of the housing for bearing housings.

7. The arrangement of any preceding claim, wherein the first part of the housing comprises sealed cable feedthrough (140) for connecting cables to stator leads.

8. The arrangement of claim 1, wherein the housing, excluding the protruding part, has the shape of a cuboid.

9. The arrangement of any preceding claim, wherein the connection between the first and second part and the protruding part acts as a part of the damping or flame gap of the housing.

10. The arrangement of claim 6, wherein the connection between the first and second part and the bearing housings act as a part of the damping or flame gap of the housing.

11. The arrangement of any preceding claim, wherein the protruding part has a groove for a seal.

12. A method for assembling an arrangement for a motor and a housing, comprising a stator core (104) with a longitudinal centre axis (A-A) and a housing (122) surrounding the stator core (104),
the housing comprising a first part (124) and a second part (126), the first part comprising first half of end shield (128, 130) at each axial end of the housing and the second part comprising second half of end shield (132, 134) at each axial end of the housing, the method comprising:
providing (300) a feedthrough on the first part of the housing, the feedthrough comprising cables for the motor;
lowering (302) the stator core (104) to the first part of the housing (124),
installing (304) bearing housings (118, 120) to the end shields;
connecting (306) cables from the feedthrough of the first part of the housing to stator leads;
mounting (308) the second part of the housing on the first part and the stator core;
fastening (310) the first and second parts together utilising fastening points (204, 206, 208, 210).
